# EUROPEAN PATENT SPECIFICATION

(11) **EP 4 068 151 B1**
(45) Date of publication and mention of the grant of the patent: **31.01.2024**
(21) Application number: 20899347.7
(22) Date of filing: 09.11.2020
(51) Int. Cl.: G06V 10/24

(54) **LINEAR PROCESSING METHOD AND APPARATUS IN FACE IMAGE, TERMINAL DEVICE, AND STORAGE MEDIUM**
LINEARVERARBEITUNGSVERFAHREN UND -VORRICHTUNG IN EINEM GESICHTSBILD, ENDGERÄT UND SPEICHERMEDIUM
PROCÉDÉ ET APPAREIL DE TRAITEMENT LINÉAIRE DANS UNE IMAGE DE VISAGE, DISPOSITIF DE TERMINAL ET SUPPORT DE STOCKAGE

(30) Priority: 09.12.2019 CN 201911252855
(43) Date of publication of application: 05.10.2022
(73) Proprietor: GUANGDONG OPPO MOBILE TELECOMMUNICATIONS CORP., LTD., Dongguan, Guangdong 523860 (CN)
(72) Inventor: WANG, Yun, Dongguan, Guangdong 523860 (CN)
(74) Representative: Grassi, Stefano
(86) International application number: PCT/CN2020/127552
(87) International publication number: WO 2021/114991

(56) References cited:
- CN-A- 104 994 281
- CN-A- 105 046 657
- CN-A- 105 046 657
- CN-A- 107 451 965
- CN-A- 111 008 605
- US-A1- 2019 370 943
- YANG, Bo et al.: "Automatical Content-Adapting Stretched Distortion Correction Algorithm for Wide-Angle Images", Journal of Zhejiang University (Engineering Science), vol. 50, no. 9, 30 September 2016 (2016-09-30), pages 1711-1717, XP055938963,

## Description

### CROSS REFERENCE OF RELATED APPLICATION

The present disclosure claims a priority from Chinese patent application No. 201911252855.2 filed to the China National Intellectual Property Administration on December 09, 2019.

### FIELD OF THE DISCLOSURE

The present disclosure relates to the field of image processing technologies, and more particularly to a face image straight line processing method, a face image straight line processing apparatus, a terminal device, and a storage medium. The invention is set out in the appended set of claims.

### BACKGROUND OF THE DISCLOSURE

When a user captures an image containing human images with a camera, a face near an edge of the image would be distorted due to perspective distortion caused by perspective projection in an imaging process of the camera. Since human eyes are sensitive to distortions of face and human image, the distortion of face would seriously affect visual effect, and therefore it is necessary to correct the distortion of face in the image. CN105046657 is directed towards an image stretching distortion adaptive correction method. The method begins with dividing an image into uniform square grids and establishing an input-output coordinate; determining a person area and a background area by using a face detection algorithm, establishing homographic constraint for each grid in order to correct the stretching distortion appearing in the person area, establishing homographic compatible constraint for adjacent grids in order to guarantee the continuity of the grids; determining a linear area by using a linear detection algorithm and establishing linear maintaining constraint for the linear area in order to protect a corrected line against bending; guaranteeing the uniform continuity of the whole image by means of global coordinate smoothness and uniformity constraint; using an energy function to express the constraint, adding weights and adding the energy equations, computing a coordinate value with the minimum energy by using a least square method so as to obtain a corrected image coordinate value; performing rendering by using bilinear mapping to obtain a final corrected image.

### SUMMARY OF THE DISCLOSURE

A face image straight line processing method, a face image straight line processing apparatus, a terminal device and a storage medium are provided in the present disclosure. Attributes of each of straight lines are determined based on positions of face frames and start coordinates and end coordinates of the straight lines in the image. An effective straight line set to be protected is extracted from the straight lines based on the attributes of each of the straight lines. Relative positions of points on each of effective straight lines in the effective straight line set are kept unchanged during performing face distortion correction on the image to be processed, the protection of the straight lines in the image is realized, which can effectively avoid the dislocation of the same straight line into different straight lines after correction, make the straight lines in the image after face distortion correction more natural, and improve the visual effect. Technical problems in the prior art that the dislocation of the same straight line into different straight lines due to face distortion correction and poor visual effect are solved. The invention is set out in the appended set of claims.

In a first aspect, an embodiment of the present disclosure provides a face image straight line processing method, including:
performing face detection and straight line detection on an image to be processed, and thereby determining positions of face frames and start coordinates and end coordinates of straight lines in the image;
determining attributes of each of the straight lines based on the positions of the face frames and the start coordinates and the end coordinates of the straight lines, where the attributes of each of the straight lines include a length of the straight line and relative positions of the straight lines relative to the face frames;
extracting, based on the attributes of each of the straight lines, an effective straight line set to be protected from the straight lines; and
keeping, during performing face distortion correction on the image to be processed, relative positions of points on each of effective straight lines in the effective straight line set unchanged.

In a second aspect, an embodiment of the present disclosure provides a face image straight line processing apparatus. The apparatus includes a first determination module, a second determination module, an extraction module, and a distortion correction module.

The first determination module is configured to perform face detection and straight line detection on an image to be processed and thereby determine positions of face frames and start coordinates and end coordinates of straight lines in the image.

The second determination module is configured to determine, based on the positions of the face frames and the start coordinates and the end coordinates of the straight lines, attributes of each of the straight lines, where the attributes of each of the straight lines include a length of the straight line and relative positions of the straight lines relative to the face frames.

The extraction module is configured to extract an effective straight line set to be protected from the straight lines based on the attributes of each of the straight lines.

The distortion correction module is configured to keep, during performing face distortion correction on the image to be processed, relative positions of points on each of effective straight lines in the effective straight line set unchanged.

In a third aspect, an embodiment of the present disclosure provides a terminal device. The terminal device includes a processor and a memory.

The processor is configured to read executable program code stored in the memory and run a program corresponding to the executable program code to thereby execute the face image straight line processing method. The face image straight line processing method includes: performing face detection and straight line detection on an image to be processed, and thereby determining positions of face frames and start coordinates and end coordinates of straight lines in the image; determining attributes of each of the straight lines based on the positions of the face frames and the start coordinates and the end coordinates of the straight lines, where the attributes of each of the straight lines include a length of the straight line and relative positions of the straight line relative to the face frames; extracting, based on the attributes of each of the straight lines, an effective straight line set to be protected from the straight lines; and keeping, during performing face distortion correction on the image to be processed, relative positions of points on each of effective straight lines in the effective straight line set unchanged.

In a fourth aspect, an embodiment of the present disclosure provides a computer-readable storage medium stored with a computer program. The computer program is executable by the processor to implement the face image straight line processing method. The face image straight line processing method includes: performing face detection and straight line detection on an image to be processed, and thereby determining positions of face frames and start coordinates and end coordinates of straight lines in the image; determining attributes of each of the straight lines based on the positions of the face frames and the start coordinates and the end coordinates of the straight lines, where the attributes of each of the straight lines include a length of the straight line and relative positions of the straight line relative to the face frames; extracting, based on the attributes of each of the straight lines, an effective straight line set to be protected from the straight lines; and keeping, during performing face distortion correction on the image to be processed, relative positions of points on each of effective straight lines in the effective straight line set unchanged.

The additional aspects and advantages of the present disclosure will be described in the following description, and some will become apparent from the following description, or learned through the practice of the present disclosure.

### BRIEF DESCRIPTION OF DRAWINGS

The above and/or additional aspects and advantages of the present disclosure will become apparent and easy to understand from the following description of embodiments in combination with the accompanying drawings.
FIG. 1 illustrates a flowchart of a face image straight line processing method provided in an embodiment of the present disclosure.
FIG. 2 illustrates a flowchart of a face image straight line processing method provided in the embodiment of present disclosure.
FIG. 3 illustrates a flowchart of a face image straight line processing method provided in the embodiment of present disclosure.
FIG. 4 illustrates a flowchart of a face image straight line processing method provided in another embodiment of present disclosure.
FIG. 5 illustrates a flowchart of a face image straight line processing method provided in an example useful for understanding the present disclosure but outside the scope of the present disclosure as claimed.
FIG. 6 illustrates a schematic structural diagram of a face image straight line processing apparatus provided in an embodiment of the present disclosure.
FIG. 7 illustrates a schematic structural diagram of a face image straight line processing apparatus provided in the embodiment of the present disclosure.
FIG. 8 illustrates a schematic structural diagram of a face image straight line processing apparatus provided in the embodiment of the present disclosure.
FIG. 9 illustrates a schematic structural diagram of a face image straight line processing apparatus provided in another embodiment of the present disclosure.
FIG. 10 illustrates a schematic structural diagram of an electronic equipment control device provided in an example useful for understanding the present disclosure but outside the scope of the present disclosure as claimed.
FIG. 11 illustrates a schematic structural diagram of a terminal device provided an embodiment of the present disclosure.

### DETAILED DESCRIPTION OF EMBODIMENTS

Embodiments of the present disclosure are described in detail below, and the embodiments are illustrated in the accompanying drawings, in which the same or similar reference numerals throughout represent the same or similar elements or elements with the same or similar functions. The embodiments described below with reference to the accompanying drawings are exemplary and are intended to explain the present disclosure and cannot be understood as limitations to the present disclosure.

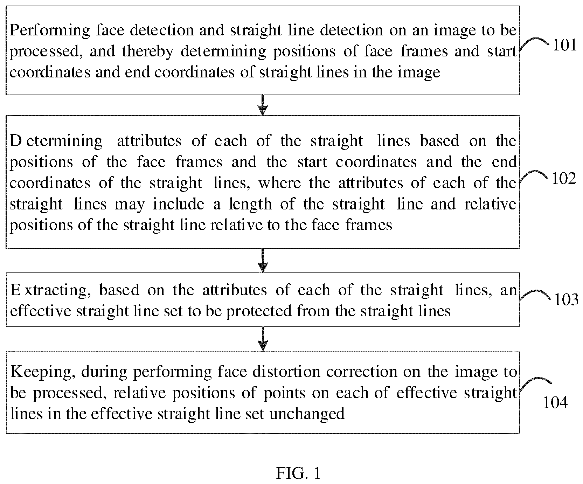

Referring to FIG. 1, a face image straight line processing method according to an embodiment of present disclosure may include:
performing face detection and straight line detection on an image to be processed, and thereby determining positions of face frames and start coordinates and end coordinates of straight lines in the image;
determining attributes of each of the straight lines based on the positions of the face frames and the start coordinates and the end coordinates of the straight lines , where the attributes of each of the straight lines may include a length of the straight line and relative positions of the straight line relative to the face frames;
extracting, based on the attributes of each of the straight lines, an effective straight line set to be protected from the straight lines; and
keeping, during performing face distortion correction on the image to be processed, relative positions of points on each of effective straight lines in the effective straight line set unchanged.

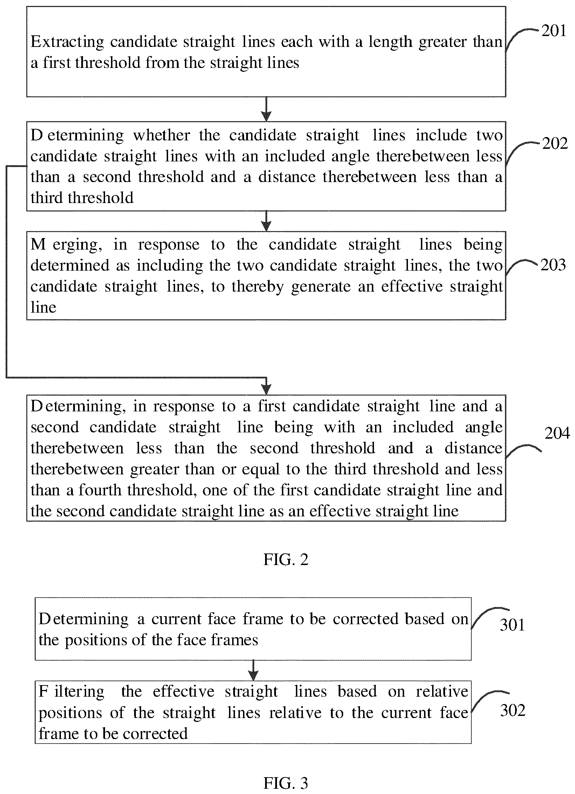

Referring to FIG. 2, the extracting, based on the attributes of each of the straight lines, an effective straight line set to be protected from the straight lines includes:
extracting candidate straight lines each with a length greater than a first threshold from the straight lines;
determining whether the candidate straight lines include two candidate straight lines with an included angle therebetween less than a second threshold and a distance therebetween less than a third threshold; and
merging, in response to the candidate straight lines being determined as including the two candidate straight lines, the two candidate straight lines, to thereby generate an effective straight line.

Referring to FIG. 2, in some embodiments, after the determining whether the candidate straight lines include two candidate straight lines with an included angle therebetween less than a second threshold and a distance therebetween less than a third threshold, the method may further include:
determining, in response to a first candidate straight line and a second candidate straight line being with an included angle therebetween less than the second threshold and a distance therebetween greater than or equal to the third threshold and less than a fourth threshold, one of the first candidate straight line and the second candidate straight line as an effective straight line.

Referring to FIG. 3, after the extracting, based on the attributes of each of the straight lines, an effective straight line set to be protected from the straight lines, the method further includes:
determining a current face frame to be corrected based on the positions of the face frames; and
filtering the effective straight lines based on relative positions of the straight lines relative to the current face frame to be corrected.

In some embodiments, the determining a current face frame to be corrected based on the positions of the face frames may include:
determining a face frame being not fully located within a preset field-of-view range as the current face frame to be corrected.

In some embodiments, before the determining a face frame being not fully located within a preset field-of-view range as the current face frame to be corrected, the method may further include:
determining the preset field-of-view range based on attributes of a camera module capturing the image to be processed, where the attributes of the camera module include a setting position of the camera module in a terminal device and a field-of-view of the camera module.

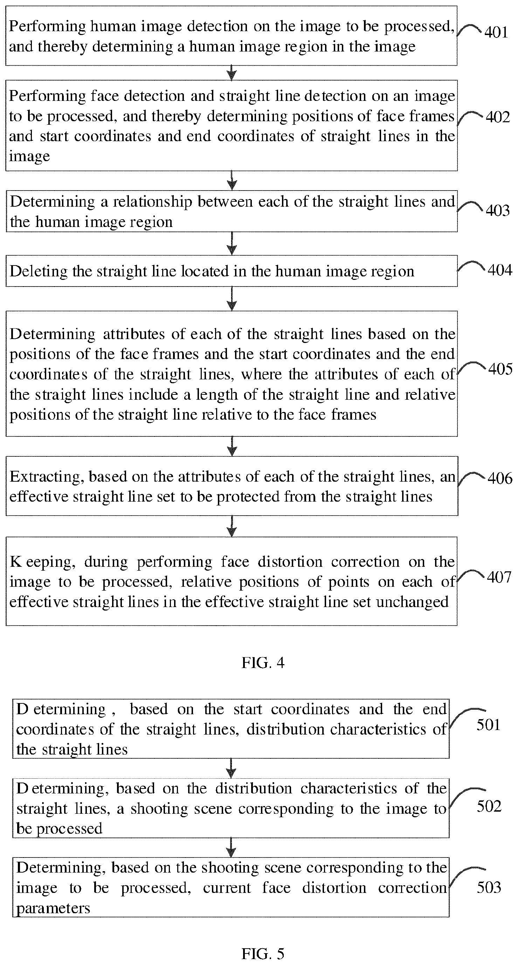

Referring to FIG. 4, in some embodiments, the face image straight line processing method may further include:
performing human image detection on the image to be processed, and thereby determining a human image region in the image;
where before the extracting, based on the attributes of each of the straight lines, an effective straight line set to be protected from the straight lines, the method may further include:
determining a relationship between each of the straight lines and the human image region; and
deleting the straight line located in the human image region.

Referring to FIG. 5, FIG. 5 is an example useful for understanding the present disclosure but outside the scope of the present disclosure as claimed, in some embodiments, after the determining positions of face frames and start coordinates and end coordinates of straight lines in the image, the method may further include:
determining, based on the start coordinates and the end coordinates of the straight lines, distribution characteristics of the straight lines;
determining, based on the distribution characteristics of the straight lines, a shooting scene corresponding to the image to be processed; and
determining, based on the shooting scene corresponding to the image to be processed, current face distortion correction parameters.

In some embodiments, the performing face detection and straight line detection on an image to be processed, and thereby determining positions of face frames and start coordinates and end coordinates of straight lines in the image may include:
detecting faces in the image to be processed based on a preset face detection algorithm, and identifying positions of the faces through the face frames; and
detecting the straight lines in the image based on a preset straight line detection algorithm, to thereby determine the start coordinates and the end coordinates of the straight lines.

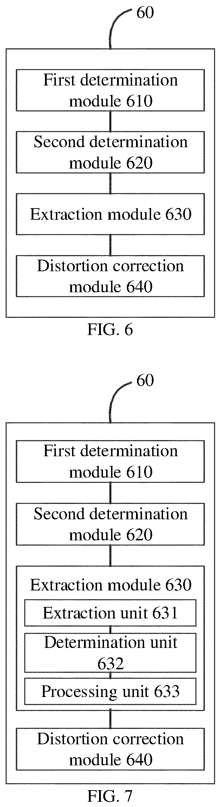

Referring to FIG. 6, a straight line processing apparatus 60 for a face image according to an embodiment of the present disclosure includes a first determination module 610, a second determination module 620, an extraction module 630 and a distortion correction module 640. The first determination module 610 is configured to perform face detection and straight line detection in an image to be processed and thereby determine positions of face frames and start coordinates and end coordinates of straight lines in the image. The second determination module 620 is configured to determine attributes of each of the straight lines based on the positions of the face frames and the start coordinates and the end coordinates of the straight lines, and the attributes of each of the straight lines include a length of the straight line and relative positions of the straight line relative to the face frames. The extraction module 630 is configured to extract, based on the attributes of each of the straight lines, an effective straight line set to be protected from the straight lines. The distortion correction module 640 is configured to keep, during performing face distortion correction on the image to be processed, relative positions of points on each of effective straight lines in the effective straight line set unchanged.

Referring to FIG. 7, the extraction module 630 includes extraction unit 631, a determination unit 632, and a processing unit 633.

The extraction unit 631 is configured to extract candidate straight lines each with a length greater than a first threshold from the straight lines.

The determination unit 632 is configured to determine whether the candidate straight lines include two candidate straight lines with an included angle therebetween less than a second threshold and a distance therebetween less than a third threshold.

The processing unit 633 is configured to merge, in response to the candidate straight lines being determined as including the two candidate straight lines, the two candidate straight lines to generate an effective straight line.

Referring to FIG. 7, in some embodiments, the processing unit 633 is further configured to determine, in response to a first candidate straight line and a second candidate straight line being with an included angle therebetween less than the second threshold and a distance therebetween greater than or equal to the third threshold and less than a fourth threshold, one of the first candidate straight line and the second candidate straight line as an effective straight line.

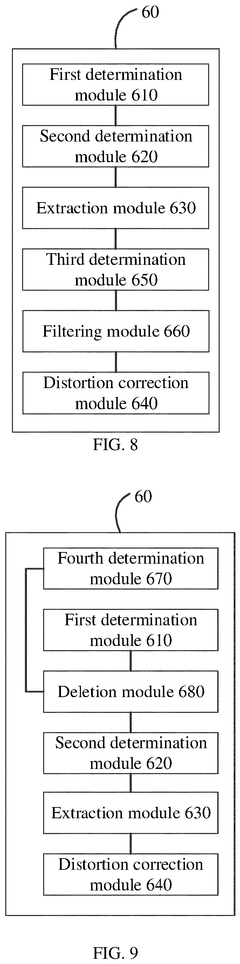

Referring to FIG. 8, the straight line processing apparatus 60 for a face image further includes a third determination module 650 and a filtering module 660. The third determination module 650 is configured to determine a current face frame to be corrected based on the positions of the face frames. The filtering module 660 is configured to filter the effective straight lines based on relative positions of each of the straight lines relative to the face frame to be corrected.

Referring to FIG. 8, the third determination module 650 is further configured to determine a face frame being not fully located within a preset field-of-view range as the face frame to be corrected.

Referring to FIG. 8, in some embodiments, the third determination module 650 is further configured to determine the preset field-of-view range based on attributes of a camera module capturing the image to be processed, and the attributes of the camera module include a setting position of the camera module in a terminal device and a field-of-view of the camera module.

Referring to FIG. 9, the straight line processing apparatus 60 for a face image may further includes a fourth determination module 670 and a deletion module 680. The fourth determination module 670 is configured to perform human image detection on the image to be processed and thereby determine a human image region in the image. The deletion module 680 is configured to determine a relationship between each of the straight lines and the human image region, and delete the straight line located in the human image region.

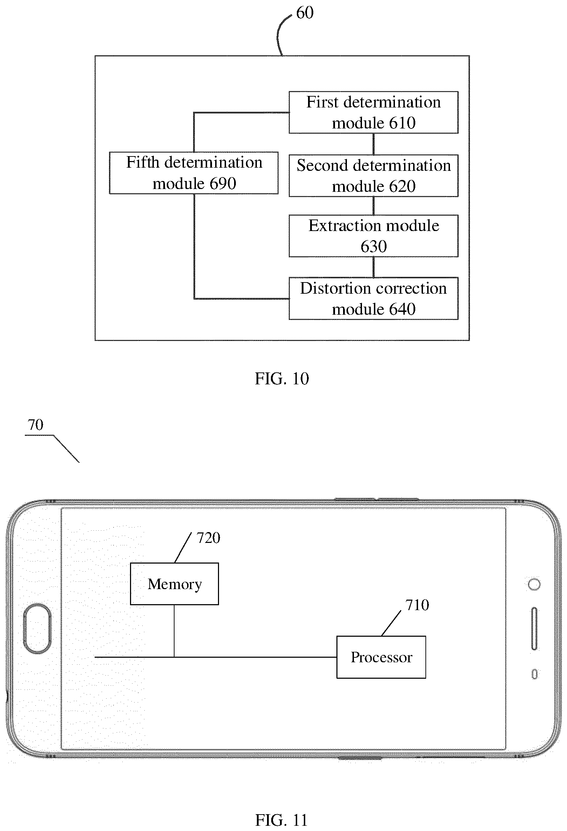

Referring to FIG. 10, FIG. 10 is an example useful for understanding the present disclosure but outside the scope of the present disclosure as claimed, the straight line processing apparatus 60 for a face image may further includes a fifth determination module 690. The fifth determination module 690 is configured to determine, based on the start coordinates and the end coordinates of the straight lines, distribution characteristics of the straight lines; to determine, based on the distribution characteristics of the straight lines, a shooting scene corresponding to the image to be processed; and to determine, based on the shooting scene corresponding to the image to be processed, current face distortion correction parameters.

Referring to FIG. 10, in some embodiments, the first determination module 610 is further configured to detect faces in the image to be processed based on a preset face detection algorithm, and identify positions of the faces through the positions of the face frames; and detect, based on a preset straight line detection algorithm, the straight lines in the image to be processed to determine the start coordinates and the end coordinates of the straight lines.

Referring to FIG. 11, a terminal device 70 according to an embodiment of the present disclosure includes a processor 710 and a memory 720. The processor 710 is configured to read executable program code stored in the memory 720 and run a program corresponding to the executable program code to thereby execute the face image straight line processing method of any of the above embodiments.

A computer-readable storage medium of the embodiment of present disclosure is stored with a computer program. The computer program is executable by a processor to implement the face image straight line processing method of any of the above embodiments.

The face image straight line processing method, the face image straight line processing apparatus, the terminal device and the storage medium according to embodiments of the present disclosure are described below with reference to the accompanying drawings.

When a user captures an image containing human images, for example, when taking a selfie with the front camera in a mobile phone, a face near an edge of the images would be distorted due to perspective distortion caused by perspective projection in an imaging process of the camera.

Perspective distortion refers to that an object and its surrounding area are completely different from those seen from a standard lens. Due to changes in the relative proportions of far and near features, the object and its surrounding area are bent or distorted, such as a circular object at the edge becomes an ellipse.

Face distortion correction method may be used to correct the face perspective distortion caused by perspective projection. In the existing face distortion correction methods, conformal projection is used for distortion correction for the contents requiring perspective distortion correction to maintain the background, and smooth fusion is realized by constraining the transition between the background and the corrected contents to achieve the purpose of correction.

However, the existing face distortion correction methods, after correcting the face in the image, will make the same straight line in the original image dislocation into different straight lines after correction, resulting in poor visual effect of the image. Specifically, in the existing face distortion correction methods, the same straight line that passes through the human body, or the same straight line is divided into two or more sections of straight lines that cannot be detected by the detection algorithm due to the influence of image noise, illumination, etc., is subjected to protection processing respectively, resulting in the same straight line is dislocated into different straight lines in the corrected image, which affects the visual effect.

In view of the above problems, a face image straight line processing method is provided in the present disclosure. Attributes of each of straight lines are determined based on positions of face frames and start coordinates and end coordinates of the straight lines. An effective straight line set to be protected is extracted from the straight lines based on the attributes of each of the straight lines. Relative positions of points on each of effective straight lines in the effective straight line set to be protected are kept unchanged during performing face distortion correction on the image to be processed, the protection of the straight line in the image is realized, which can effectively avoid the dislocation of the same straight line into different straight lines after correction, make the straight lines in the image after face distortion correction more natural, and improve the visual effect. Technical problems in the prior art that the dislocation of the same straight line into different straight lines due to face distortion correction and poor visual effect are solved.

FIG. 1 is a flowchart of a face image straight line processing method provided in an embodiment of present disclosure. The method may be implemented by the face image straight line processing apparatus provided in the embodiment of present disclosure. The face image straight line processing apparatus may be applied to the terminal device. The terminal device may be any device with photographing function such as mobile phone, tablet computer and digital camera.

As shown in FIG. 1, the face image straight line processing method includes block 101 through block 104 as follows.

At the block 101, performing face detection and straight line detection on an image to be processed, and thereby determining positions of face frames and start coordinates and end coordinates of straight lines in the image.

In this embodiment, for the image to be processed, the face detection technology may be used to detect faces contained in the image from the image to be processed, and positions of the faces may be accurately framed. For example, common face methods such as convolution neural network (CNN) cascade for face detection, SeetaFace face detection, OpenCV face detection may be used to detect the faces contained in the image to be processed, and the detected faces are identified through the face frames. For each face frame identified in the image, its position is known, so that the faces contained in the image and the positions of the face frames may be directly determined through face detection.

For the image to be processed, the straight line detection technology may be used to detect the straight lines in the image, and then the start coordinates and the end coordinates of the straight lines are determined. For example, common straight line detection algorithms such as Hough_line straight line detection algorithm, line segment detector (LSD) straight line detection algorithm, and edge-drawing-lines (EDlines) detection algorithm may be used to detect the straight lines in the image to be processed and obtain the start coordinates and the end coordinates of the straight lines.

In the embodiment of present disclosure, the upper left corner of the image to be processed may be used as a coordinate origin to establish an image pixel coordinate system. The face frame is usually square or rectangular. Therefore, in this embodiment, the position of each face frame may be represented by coordinates of four endpoints of the face frame, and the coordinates of endpoints may be respectively represented by the number of rows and columns of pixels corresponding to the endpoints. For each detected straight line, the start coordinate of the straight line may be represented by the numbers of row and column of pixel corresponding to the start point of the straight line, and the end coordinate of the straight line may be expressed by the number of rows and columns of pixels corresponding to the end point of the line. Of course, other methods may also be used to represent the positions of the face frames and the start coordinates and the end coordinates of the straight lines, which is not limited in the present disclosure.

At the block 102, determining attributes of each of the straight lines based on the positions of the face frames and the start coordinates and the end coordinates of the straight lines, where the attributes of each of the straight lines may include a length of the straight line and relative positions of the straight line relative to the face frames.

In this embodiment, after determining the positions of the face frames, the start coordinates and the end coordinates of the straight lines, the lengths of the straight lines and relative positions of the straight lines relative to the face frames may be determined based on the positions of the face frames, the start coordinates and the end coordinates of the straight lines. The length of each straight line may be determined according to the start and end coordinates of the straight line. The relative position of the straight line relative to the face frame may include but is not limited to a distance between the straight line and the face frame. The distance may be the shortest vertical distance from the point on the face frame to the straight line.

At the block 103, extracting, based on the attributes of each of the straight lines, an effective straight line set to be protected from the straight lines.

In this embodiment, after determining the attributes of each of the straight lines, the effective straight line set to be protected may be extracted from the straight lines based on the attributes of each of the straight lines. Straight lines in the effective straight line set are effective straight lines to be protected.

For example, straight lines with too short length may be eliminated from the straight lines, and then the straight lines far from the face frames may be eliminated from the remaining straight lines based on the relative positions of the remaining straight lines relative to the face frames, and the final remaining straight lines as the effective straight lines to be protected to thereby obtain the effective straight line set, so that only the straight lines related to the face frames to be processed are retained in the effective straight line set, so as to reduce the amount of calculation in straight line protection.

At the block 104, keeping, during performing face distortion correction on the image to be processed, relative positions of points on each of effective straight lines in the effective straight line set unchanged.

In this embodiment, after determining the effective straight line set to be protected, the image to be processed may be performed with face distortion correction. Among them, conformal projection method may be used to correct the distortion of face in the image. During the face distortion correction, the relative positions of points on each effective straight line in the effective straight line set are kept unchanged, that is, all points on the effective straight line may only be translated at the same time, and cannot be rotated or distorted. Therefore, by keeping the relative positions of the points on the effective straight line unchanged, the same straight line will not be dislocated into different straight lines in the distortion corrected image, so as to ensure the visual effect of the image.

The face image straight line processing method of this embodiment performs face detection and straight line detection on the image to be processed. The positions of the face frames, the start coordinates and the end coordinates of the straight lines in the image are determined. The attributes of each of the straight lines are determined according to the positions of the face frames, the start coordinates and the end coordinates of the straight lines, and the attributes of each of the straight lines include the length of the straight line and the relative positions of the straight line relative to the face frames. Based on the attributes of each of the straight lines, the effective straight line set to be protected is extracted from the straight lines, and then the relative positions of points on each of the effective straight lines in the effective straight line set are kept unchanged during performing face distortion detection on the image to be processed. Therefore, the protection of straight lines in the image is realized, the dislocation of the same straight line into different straight lines after correction can be effectively avoided, the straight lines in the face distortion corrected image are kept more natural, the visual effect and the user experience are improved.

As shown in FIG. 2, based on the embodiment shown in FIG. 1, the block 103 includes block 201 through block 204 as follows.

At the block 201, extracting candidate straight lines each with a length greater than a first threshold from the straight lines.

In this embodiment, the candidate straight lines each with a length greater than the first threshold may be extracted from the straight lines according to the lengths of the straight lines. The first threshold may be set in advance, such as setting the first threshold to be 5 millimeters (mm), 10 mm, etc.

At the block 202, determining whether the candidate straight lines include two candidate straight lines with an included angle therebetween less than a second threshold and a distance therebetween less than a third threshold.

The second threshold and the third threshold may be set in advance, for example, setting the second threshold to be 3°, and setting the third threshold to be 3 mm.

At the block 203, merging, in response to the candidate straight lines being determined as including the two candidate straight lines, the two candidate straight lines, to thereby generate an effective straight line.

In this embodiment, for any two candidate straight lines in the candidate straight lines, the included angle between the two candidate straight lines and the distance between the two candidate straight lines may be calculated. Specifically, the included angle between the two candidate straight lines may be calculated based on the trigonometric function according to the start coordinates and the end coordinates of the two candidate straight lines. The distance between two candidate straight lines may be determined according to the distance from the start points and end points of the two candidate straight lines to the corresponding straight line. Then, whether the included angle between the two candidate straight lines is less than the second threshold is compared, and whether the distance between the two candidate straight lines is less than the third threshold is compared. When the included angle between the two candidate straight lines is less than the second threshold and the distance between the two candidate straight lines is less than the third threshold, the two candidate straight lines are merged into the same straight line to obtain the effective straight line.

In at least one embodiment, after merging at least two straight lines belonging to the same straight line in the detected straight lines, there may still be a large number of straight lines in the image, including many parallel straight lines, and the large number of straight lines will lead to a large amount of subsequent calculation. Therefore, the merged straight lines may be optimized and the parallel straight lines in the image may be processed according to the distance between parallel straight lines. In this situation, as shown in FIG. 2, after the block 202, the following block 204 may further be included:

At the block 204, determining, in response to a first candidate straight line and a second candidate straight line being with an included angle therebetween less than the second threshold and a distance therebetween greater than or equal to the third threshold and less than a fourth threshold, one of the first candidate straight line and the second candidate straight line as an effective straight line.

Specifically, the fourth threshold may be set in advance, and the fourth threshold is greater than the third threshold. For example, the third threshold is set to be 3 mm, the fourth threshold may be set to be 8 mm, 10 mm, etc. The magnitude of the fourth threshold may be determined according to the empirical value or the grid size of the projection network during the face distortion correction, and the present disclosure is not limited to this.

In this embodiment, when the included angle between the first candidate straight line and the second candidate straight line of the candidate straight lines is less than the second threshold, and the distance between the first candidate straight line and the second candidate straight line is greater than or equal to the third threshold and less than the fourth threshold, it may be considered that the first candidate straight line and the second candidate straight line are two parallel straight lines, and then any one of the first candidate straight line and the second candidate straight line may be determined as the second effective straight line. For example, the first candidate straight line may be determined as the second effective straight line, or the second candidate straight line may be determined as the second effective straight line. Alternatively, the relative positions of the first candidate straight line and the second candidate straight line relative to the face frames may be compared, and the first candidate straight line or the second candidate straight line close to the face frame may be determined as the effective straight line.

In the face image straight line processing method of this embodiment, the candidate straight lines each with a length greater than the first threshold from the straight lines are extracted, whether the candidate straight lines include the two candidate straight lines with the included angle between the two candidate straight lines less than the second threshold and the distance less than the third threshold are determined, and the two candidate straight lines are merged when included to generate the effective straight line. Therefore, the merging processing of the same straight line is realized, so that different segments of the same straight line are protected during face distortion correction, so as to avoid the dislocation of the same straight line into two different straight lines after the face distortion correction. When the included angle between the first candidate straight line and the second candidate straight line is less than the second threshold, the distance is greater than or equal to the third threshold, and less than the fourth threshold, any one of the first candidate straight line and the second candidate straight line is determined to be the effective straight line. Therefore, the optimization processing of parallel straight lines in the image is realized and the calculation amount of subsequent processing is reduced.

Since the influence of face correction on the background is within a certain range, the straight lines far from the face will not be distorted by the face distortion correction, so that only the straight lines related to the face frames to be processed usually need to be protected. In a possible implementation of the embodiment of present disclosure, before the face distortion correction, the straight lines in the effective straight line set may be filtered first, and only the straight lines related to the face frames may be retained to reduce the amount of calculation. As shown in FIG. 3, on the basis of the embodiment shown in FIG. 1, after the block 103, the method further includes block 301 and block 302 as follows.

At the block 301: determining a current face frame to be corrected based on the positions of the face frames.

In this embodiment, the corresponding face frame may be determined as the current face frame to be corrected according to the determined positions of the face frames.

In addition, because the faces close to the edge of the image will be distorted, the face distortion correction needs to be carried out. Therefore, in a possible implementation of the embodiment of the present disclosure, the face frame not fully located within a preset field-of-view range may be determined as the current face frame to be corrected.

Among them, the field-of-view range may be set in advance, such as setting the preset field-of-view range to be 50°, 70°, etc. Moreover, the field-of-view range may be determined according to the attributes of a camera module of the terminal device.

As a possible implementation, the preset field-of-view range are determined based on the attributes of the camera module capturing the image to be processed. Among them, the attributes of the camera module may include a setting position of the camera module in a terminal device and a field-of-view of the camera module. It may be understood that for a known camera module, the field-of-view has been determined. In the embodiment of the present disclosure, the field-of-view of the camera module and the setting position of the camera module in the terminal device may be prestored in the terminal device. When necessary, the prestored field-of-view and setting position of the camera module can be obtained, and then the preset field-of-view range may be determined according to the field-of-view and setting position of the camera module.

At the block 302, filtering the effective straight lines based on relative positions of the straight lines relative to the current face frame to be corrected.

In this embodiment, the effective straight lines in the effective straight line set may be filtered based on the relative positions of the straight lines relative to the current face frame to be corrected. For example, the effective straight lines may be concentrated, and the effective straight lines far from the relative position of the face frame to be corrected may be deleted, and only the effective straight lines close to the face frame to be corrected may be retained for protection, so as to reduce the amount of calculation.

In the face image straight line processing method of this embodiment, the current face frame to be corrected is determined based on the positions of the face frames, and the effective straight lines are filtered based on the relative positions of the straight lines relative to the current face frame to be corrected. In this situation, the number of effective straight lines in the effective straight line set can be effectively reduced, only the straight lines related to the face frame are retained for protection, the amount of calculation is reduced and the processing efficiency is improved.

FIG. 4 is a flowchart of the face image straight line processing method provided in another embodiment of present disclosure. As shown in FIG. 4, on the basis of the above embodiments, the face image straight line processing method may further include block 401 through block 407 as follows.

At the block 401, performing human image detection on the image to be processed, and thereby determining a human image region in the image.

In this embodiment, the human image segmentation technology may be used to detect the human image of the image to be processed, and a human image region and a background region may be segmented from the image to be processed.

At the block 402, performing face detection and straight line detection on an image to be processed, and thereby determining positions of face frames and start coordinates and end coordinates of straight lines in the image.

It should be noted that in this embodiment, the execution sequence of the block 401 and the block 402 may be executed successively or simultaneously. The present disclosure only takes the execution of the block 402 after the block 401 as an example, not as a limitation of the present disclosure.

At the block 403, determining a relationship between each of the straight lines and the human image region.

In this embodiment, the human image region may be calibrated by using the coordinates of each point on the edge of the human image, and the relationship between each of the straight lines and the human image region may be determined based on the start coordinates and the end coordinates of the straight lines. The relationship between each of the straight lines and the human image region may include but is not limited to the straight line in the human image region, the straight line outside the human image region, and a part of the straight line in the human image region.

At the block 404, deleting the straight line located in the human image region.

In this embodiment, when deleting the straight line located in the human image region, for a part of the straight line in the human image region, the whole straight line may be deleted, or only that part of the straight line in the human image region may be deleted, and another part of the straight line outside the human image region may be retained.

At the block 405, determining attributes of each of the straight lines based on the positions of the face frames and the start coordinates and the end coordinates of the straight lines where the attributes of each of the straight lines include a length of the straight line and relative positions of the straight line relative to the face frames.

At the block 406: extracting, based on the attributes of each of the straight lines, an effective straight line set to be protected from the straight lines.

At the block 407: keeping, during performing face distortion correction on the image to be processed, relative positions of points on each of effective straight lines in the effective straight line set unchanged.

In this embodiment, for the description of the block 405 through the block 407, please refer to the description of the block 103 through the block 104 in the previous embodiment, which will not be repeated here.

It should be noted that in this embodiment, the block 403 and the block 404 may be performed at any time after the straight line detection and before the extraction of the effective straight line set to be protected. This embodiment only takes the block 403 and the block 404 after the block 402 and before the block 405 as an example to explain present disclosure, not as a limitation of present disclosure.

In the face image straight line processing method of this embodiment, the image to be processed is performed with the human image detection to determine the human image region in the image, the relationship between each of the straight lines and the human image region is determined, the straight line located in the human image region is deleted. In this situation, the straight line located in the human image region can be filtered to filter the unnecessary protected straight line to thereby reduce the amount of calculation.

The following embodiment corresponding to FIG. 5 is not according to the invention and is present for illustration purposes only. FIG. 5 is a flowchart of a face image straight line processing method provided in a fifth embodiment of present disclosure. As shown in FIG. 5, on the basis of the above embodiments, after determining the positions of the face frames, the start coordinates and the end coordinates of the straight lines in the image, the method may include block 501 through block 501 through block 503 as follows.

At the block 501, determining distribution characteristics of the straight lines based on the start coordinates and the end coordinates of the straight lines.

Among them, the distribution characteristics may be, but are not limited to, length, straight line direction, distribution density, distance from adjacent straight lines, whether there is intersection between straight lines, whether there is overlap between straight lines, etc.

For example, based on the start and end coordinates of a straight line, the length and direction of the straight line may be determined, including horizontal, vertical, inclined, etc.

At the block 502, determining, based on the distribution characteristics of the straight lines, a shooting scene corresponding to the image to be processed.

Among them, the shooting scene may be an indoor scene, an outdoor scene, a building scene, a natural scenery scene, etc.

In this embodiment, the shooting scene corresponding to the image to be processed may be determined based on the distribution characteristics of the straight lines.

As an example, the corresponding relationship between different distribution characteristics and the shooting scene may be established in advance, and then the corresponding shooting scene may be determined by querying the corresponding relationship based on the determined distribution characteristics of the straight lines.

At the block 503, determining, based on the shooting scene corresponding to the image to be processed, current face distortion correction parameters.

Among them, the face distortion correction parameters corresponding to different scenes may be determined according to empirical values.

In this embodiment, after the shooting scene is determined, the current face distortion correction parameters may be determined according to the shooting scene, so that different parameters of the face distortion correction may be used to distortion correction for different shooting scenes, so as to improve the self-adaptive ability of the face distortion correction.

In the face image straight line processing method of this embodiment, the distribution characteristics of the straight lines are determined based on the start coordinates and the end coordinates of the straight lines, the shooting scene corresponding to the image to be processed is determined according to the distribution characteristics of the straight lines, and then the current face distortion correction parameters are determined according to the shooting scene corresponding to the image to be processed. In this situation, the automatic adjustment of the face distortion correction parameters according to the shooting scene is realized, and the self-adaptive ability of the face distortion correction is improved.

In order to realize the above embodiments, present disclosure further provides a face image straight line processing apparatus.

FIG. 6 is a schematic structural diagram of a face image straight line processing apparatus provided in an embodiment of the present disclosure.

As shown in FIG. 6, the straight line processing apparatus 60 for a face image includes a first determination module 610, a second determination module 620, an extraction module 630 and a distortion correction module 640.

Among them, the first determination module 610 is configured to perform face detection and straight line detection in an image to be processed and thereby determine positions of face frames and start coordinates and end coordinates of straight lines in the image.

The second determination module 620 is configured to determine attributes of each of the straight lines based on the positions of the face frames and the start coordinates and the end coordinates of the straight lines, and the attributes of each of the straight lines include a length of the straight line and relative positions of the straight line relative to the face frames.

The extraction module 630 is configured to extract, based on the attributes of each of the straight lines, an effective straight line set to be protected from the straight lines.

The distortion correction module 640 is configured to keep, during performing face distortion correction on the image to be processed, relative positions of points on each of effective straight lines in the effective straight line set unchanged.

In the embodiment of the present disclosure, as shown in FIG. 7, on the basis of the embodiment shown in FIG. 6, the extraction module 630 includes an extraction unit 631, a determination unit 632, and a processing unit 633.

The extraction unit 631 is configured to extract candidate straight lines each with a length greater than a first threshold from the straight lines.

The determination unit 632 is configured to determine whether the candidate straight lines include two candidate straight lines with an included angle therebetween less than a second threshold and a distance therebetween less than a third threshold.

The processing unit 633 is configured to merge, in response to the candidate straight lines being determined as including the two candidate straight lines, the two candidate straight lines to generate an effective straight line.

In a possible implementation of the embodiment of present disclosure, the processing unit 633 is further configured to determine, in response to a first candidate straight line and a second candidate straight line being with an included angle therebetween less than the second threshold and a distance therebetween greater than or equal to the third threshold and less than a fourth threshold, one of the first candidate straight line and the second candidate straight line as an effective straight line.

The candidate straight lines each with a length greater than the first threshold from each straight line are extracted, whether the candidate straight lines include two candidate straight lines with the included angle between the two candidate straight lines less than the second threshold and the distance less than the third threshold is determined. When included, the two candidate straight lines are merged to generate the effective straight line. In this situation, the merging processing of the same straight line is realized, so that different segments of the same straight line are protected during the face distortion correction, and the dislocation of the same straight line into two different straight lines after the face distortion correction can be avoided.

In the embodiment of present disclosure, as shown in FIG. 8, on the basis of the embodiment shown in FIG. 6, the straight line processing apparatus 60 for a face image further includes a third determination module 650 and a filtering module 660.

The third determination module 650 is configured to determine a current face frame to be corrected based on the positions of the face frames.

In a possible implementation of the embodiment of present disclosure, the third determination module 650 is specifically configured to determine a face frame being not fully located within a preset field-of-view range as the face frame to be corrected.

In at least one embodiment, the third determination module 650 is further configured to determine the preset field-of-view range based on attributes of a camera module capturing the image to be processed. The attributes of the camera module may include a setting position of the camera module in a terminal device and a field-of-view of the camera module.

The filtering module 660 is configured to filter the effective straight lines based on relative positions of each of the straight lines relative to the face frame to be corrected.

The current face frame to be corrected is determined based on the positions of the face frames, and the effective straight lines are filtered based on the relative positions of each of the straight lines relative to the face frame to be corrected. In this situation, the number of effective straight lines in the effective straight line set can be effectively reduced, only the straight lines related to the face frame are retained for protection, the amount of calculation is reduced and the processing efficiency is improved.

In a possible implementation of the embodiment of the present disclosure, on the basis of the foregoing embodiment, for example, on the basis of the embodiment shown in FIG. 6, as shown in FIG. 9, the straight line processing apparatus 60 for a face image may further include a fourth determination module 670 and a deletion module 680.

The fourth determination module 670 is configured to perform human image detection on the image to be processed and thereby determine a human image region in the image.

A deletion module 680 is configured to determine a relationship between each of the straight lines and the human image region, and delete the straight line located in the human image region.

The image to be processed is performed the human image detection to determine the human image region in the image, the relationship between each of the straight lines and the human image region is determined, the straight line located in the human image region is deleted. In this situation, the straight line located in the human image region can be filtered to filter the unnecessary protected straight line to thereby reduce the amount of calculation.

The following embodiment corresponding to FIG. 10 is not according to the invention and is present for illustration purposes only. In a possible implementation of the embodiment of the present disclosure, on the basis of the foregoing embodiment, for example, on the basis of the embodiment shown in FIG. 6, as shown in FIG. 10, the straight line processing apparatus 60 for a face image may further include a fifth determination module 690.

The fifth determination module 690 is configured to determine, based on the start coordinates and the end coordinates of the straight lines, distribution characteristics of the straight lines; to determine, based on the distribution characteristics of the straight lines, a shooting scene corresponding to the image to be processed; and to determine, based on the shooting scene corresponding to the image to be processed, current face distortion correction parameters.

The distribution characteristics of the straight lines are determined based on the start coordinates and the end coordinates of the straight lines, the shooting scene corresponding to the image to be processed is determined according to the distribution characteristics of the straight lines, and then the current face distortion correction parameters are determined based on the shooting scene corresponding to the image to be processed. In this situation, the automatic adjustment of the face distortion correction parameters based on the shooting scene is realized, and the self-adaptive ability of the face distortion correction is improved.

It should be noted that the foregoing explanations of the embodiments of the face image straight line processing method are applicable to the face image straight line processing apparatus of this embodiment. Its implementation principle is similar and will not be repeated here.

The face image straight line processing apparatus of the embodiment of present disclosure performs face detection and straight line detection on the image to be processed. The positions of the face frames, the start coordinates and the end coordinates of the straight lines in the image are determined. The attributes of each of the straight lines are determined based on the positions of the face frames, the start coordinates and the end coordinates of the straight lines. The attributes of each of the straight lines include the length of the straight line and the relative positions of the straight line relative to the face frames. Based on the attributes of each of the straight lines, the effective straight line set to be protected is extracted from the straight lines, and then the relative positions of points on each of the effective straight lines in the effective straight line set are kept unchanged during performing face distortion detection on the image to be processed. Therefore, the protection of straight lines in the image is realized, the dislocation of the same straight line into different straight lines after correction can be effectively avoided, the straight lines in the face distortion corrected image are kept more natural, the visual effect and the user experience are improved.

In order to realize the above embodiments, the present disclosure further provides a terminal device.

FIG. 11 is a schematic structural diagram of a terminal device according to an embodiment of the present disclosure. As shown in FIG. 11, the terminal device 70 may include a processor 710 and a memory 720. The processor 710 is configured to read executable program code stored in the memory 720 and run a program corresponding to the executable program code to thereby execute the face image straight line processing method of any of the above embodiments.

In order to realize the above embodiments, the present disclosure further provides a computer-readable storage medium stored with a computer program. The computer program is executable by a processor to implement the face image straight line processing method of any of the above embodiments.

In an alternative implementation, the present embodiment may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, device, or equipment, or any combination of the above. More specific examples (non-exhaustive list) of computer-readable storage media may include electrical connection with one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the above. In the present disclosure, the computer-readable storage medium may be any tangible medium containing or storing a program, which may be used by or in combination with an instruction execution system, device or equipment.

The computer-readable signal medium may include a data signal propagating in the baseband or as part of the carrier wave, in which the computer-readable program code is carried. This transmitted data signal can take many forms, including but not limited to electromagnetic signal, optical signal or any suitable combination of the above. The computer-readable signal medium may also be any computer-readable medium other than a computer-readable storage medium, which may send, propagate or transmit a program for use by or in combination with an instruction execution system, device or equipment.

The program code stored on the computer-readable medium may be transmitted with any suitable medium, including but not limited to wireless, wire, optical cable, radio frequency (RF), etc., or any suitable combination of the above.

The computer program code for performing the operations of the present disclosure may be written in one or more programming languages or combinations thereof, including object-oriented programming languages such as Java, Smalltalk, C++, and conventional procedural programming languages such as "C" language or similar programming languages. The program code may be executed completely on the user's computer, partially on the user's computer, as a separate software package, partially on the user's computer, partially on the remote computer, or completely on the remote computer or server. In the case of a remote computer, the remote computer may be connected to the user computer through any kind of network, including a local area network (LAN) or a wide area network (WAN), or may be connected to an external computer (e.g., through the Internet using an Internet service provider).

In the description of this specification, the description referring to the terms "one embodiment", "some embodiments", "examples", "specific examples", or "some examples" means that the specific features, structures, materials or characteristics described in combination with the embodiments or examples are included in at least one embodiment or example of the present disclosure. In this specification, the schematic expression of the above terms does not have to be directed to the same embodiments or examples. In addition, the specific features, structures, materials or features described may be combined in any one or more embodiments or examples in a suitable manner. Moreover, without contradiction, those skilled in the art can combine and integrate the different embodiments or examples described in this specification and the features of different embodiments or examples.

In addition, the terms "first" and "second" are only used to descriptive purposes and cannot be understood as indicating or implying relative importance or implicitly indicating the number of indicated technical features. Thus, the features defining "first" and "second" may include at least one of the features explicitly or implicitly. In the description of the present disclosure, "multiple" means at least two, such as two, three, etc., unless otherwise expressly and specifically defined.

functional units in embodiments of present disclosure may be integrated into one processing module. Alternatively, each unit may exist separately, or two or more units may be integrated into one module. The above integrated modules may be realized in the form of hardware or software function modules. When the integrated module is realized in the form of software function module and sold or used as an independent product, it can also be stored in a computer-readable storage medium.

The storage medium mentioned above may be read only memory, magnetic disk or optical disc. Although the embodiments of the present disclosure have been shown and described above, it can be understood that the above embodiments are exemplary and cannot be understood as restrictions on the present disclosure. Those skilled in the art can change, amend, replace and modify the above embodiments within the scope of the appended claims.

## Claims

1. A face image straight line processing method, comprising:
performing (101, 402) face detection and straight line detection on an image to be processed, and thereby determining positions of face frames and start coordinates and end coordinates of straight lines in the image;
determining (102, 405) attributes of each of the straight lines based on the positions of the face frames and the start coordinates and the end coordinates of the straight lines, wherein the attributes of each of the straight lines comprise a length of the straight line and relative positions of the straight line relative to the face frames;
extracting (103, 406), based on the attributes of each of the straight lines, an effective straight line set to be protected from the straight lines; and
keeping (104, 407), during performing face distortion correction on the image to be processed, relative positions of points on each of effective straight lines in the effective straight line set unchanged;
after the extracting (103, 406), based on the attributes of each of the straight lines, an effective straight line set to be protected from the straight lines, the method further comprises:
determining (301) a current face frame to be corrected based on the positions of the face frames; and
filtering (302) the effective straight lines based on relative positions of the straight lines relative to the current face frame to be corrected;
**characterized in that** the extracting (103, 406), based on the attributes of each of the straight lines, an effective straight line set to be protected from the straight lines comprises:
extracting (201) candidate straight lines each with a length greater than a first threshold from the straight lines;
determining (202) whether the candidate straight lines comprise two candidate straight lines with an included angle therebetween less than a second threshold and a distance therebetween less than a third threshold; and
merging (203), in response to the candidate straight lines being determined as comprising the two candidate straight lines, the two candidate straight lines, to thereby generate an effective straight line.

2. The method according to claim 1, wherein after the determining whether the candidate straight lines comprise two candidate straight lines with an included angle therebetween less than a second threshold and a distance therebetween less than a third threshold, the method further comprises:
determining (204), in response to a first candidate straight line and a second candidate straight line being with an included angle therebetween less than the second threshold and a distance therebetween greater than or equal to the third threshold and less than a fourth threshold, one of the first candidate straight line and the second candidate straight line as an effective straight line.

3. The method according to claim 2, wherein the determining (204) one of the first candidate straight line and the second candidate straight line as an effective straight line, comprises:
comparing the relative positions of the first candidate straight line and the second candidate straight line relative to the face frames; and
determining, as the effective straight line, one of the first candidate straight line or the second candidate straight line that is closer to the face frame.

4. The method according to any one of claims 1-3, wherein the determining (301) a current face frame to be corrected based on the positions of the face frames comprises:
determining a face frame being not fully located within a preset field-of-view range as the current face frame to be corrected.

5. The method according to claim 4, wherein before the determining a face frame being not fully located within a preset field-of-view range as the current face frame to be corrected, the method further comprises:
determining the preset field-of-view range based on attributes of a camera module capturing the image to be processed, wherein the attributes of the camera module comprise a setting position of the camera module in a terminal device and a field-of-view of the camera module.

6. The method according to any one of claims 1-5, further comprising:
performing (401) human image detection on the image to be processed, and thereby determining a human image region in the image;
wherein before the extracting (103, 406), based on the attributes of each of the straight lines, an effective straight line set to be protected from the straight lines, the method further comprises:
determining (403) a relationship between each of the straight lines and the human image region; and
deleting (404) the straight line located in the human image region.

7. The method according to claim 6, wherein the deleting (404) the straight line located in the human image region, comprises:
in response to determining a part of the straight line located in the human image region, deleting the whole straight line; or
in response to determining a part of the straight line located in the human image region, deleting the part of the straight line located in the human image region, and retaining another part of the straight line outside the human image region.

8. The method according to any one of claims 1-7, wherein the performing (101, 402) face detection and straight line detection on an image to be processed, and thereby determining positions of face frames and start coordinates and end coordinates of straight lines in the image, comprises:
detecting faces in the image based on a preset face detection algorithm, and identifying positions of the faces through the face frames; and
detecting the straight lines in the image based on a preset straight line detection algorithm to thereby determine the start coordinates and the end coordinates of the straight lines.

9. A face image straight line processing apparatus (60), comprising:
a first determination module (610), configured to perform face detection and straight line detection in an image to be processed and thereby determine positions of face frames and start coordinates and end coordinates of straight lines in the image;
a second determination module (620), configured to determine attributes of each of the straight lines based on the positions of the face frames and the start coordinates and the end coordinates of the straight lines, wherein the attributes of each of the straight lines comprise a length of the straight line and relative positions of the straight line relative to the face frames;
an extraction module (630), configured to extract, based on the attributes of each of the straight lines, an effective straight line set to be protected from the straight lines;
a distortion correction module (640), configured to keep, during performing face distortion correction on the image to be processed, relative positions of points on each of effective straight lines in the effective straight line set unchanged;
a third determination module (650), configured to determine a current face frame to be corrected based on the positions of the face frames; and
a filtering module 660, configured to filter the effective straight lines based on relative positions of each of the straight lines relative to the face frame to be corrected
**characterized in that** the extraction module (630) comprises an extraction unit (631), a determination unit (632), and a processing unit (633);
the extraction unit (631) is configured to extract candidate straight lines each with a length greater than a first threshold from the straight lines;
the determination unit (632) is configured to determine whether the candidate straight lines include two candidate straight lines with an included angle therebetween less than a second threshold and a distance therebetween less than a third threshold; and
the processing unit (633) is configured to merge, in response to the candidate straight lines being determined as including the two candidate straight lines, the two candidate straight lines to generate an effective straight line.

10. A terminal device (70), comprising a processor (710) and a memory (720);
wherein the processor (710) is configured to read executable program code stored in the memory (720) and run a program corresponding to the executable program code to thereby execute the face image straight line processing method according to any one of claims 1-8.

11. A computer-readable storage medium, stored with a computer program, wherein the computer program is executable by a processor to implement the face image straight line processing method according to any one of claims 1-8.

## Patentansprüche

1. Gesichtsbildgeradenverarbeitungsverfahren, das Folgendes umfasst:
Durchführen (101, 402) einer Gesichtserkennung und einer Geradenerkennung an einem zu verarbeitenden Bild und dadurch Bestimmen von Positionen von Gesichtsrahmen und Anfangskoordinaten und Endkoordinaten von Geraden in dem Bild;
Bestimmen (102, 405) von Attributen jeder der Geraden basierend auf den Positionen der Gesichtsrahmen und den Anfangskoordinaten und den Endkoordinaten der Geraden, wobei die Attribute jeder der Geraden eine Länge der Gerade und relative Positionen der Gerade relativ zu den Gesichtsrahmen umfassen;
Extrahieren (103, 406) eines zu schützenden Satzes effektiver Geraden aus den Geraden basierend auf den Attributen jeder der Geraden; und
während des Durchführens einer Gesichtsverzerrungskorrektur an dem zu verarbeitenden Bild Unverändertlassen (104, 407) relativer Positionen von Punkten auf jeder von effektiven Geraden in dem Satz effektiver Geraden;
wobei das Verfahren nach dem Extrahieren (103, 406) eines zu schützenden Satzes effektiver Geraden aus den Geraden basierend auf den Attributen jeder der Geraden ferner Folgendes umfasst:
Bestimmen (301) eines momentanen zu korrigierenden Gesichtsrahmens basierend auf den Positionen der Gesichtsrahmen; und
Filtern (302) der effektiven Geraden basierend auf relativen Positionen der Geraden relativ zu dem momentanen zu korrigierenden Gesichtsrahmen;
**dadurch gekennzeichnet, dass** das Extrahieren (103, 406) eines zu schützenden Satzes effektiver Geraden aus den Geraden basierend auf den Attributen jeder der Geraden Folgendes umfasst:
Extrahieren (201) von in Frage kommenden Geraden je mit einer Länge, die größer als ein erster Schwellenwert ist, aus den Geraden;
Bestimmen (202), ob die in Frage kommenden Geraden zwei in Frage kommende Geraden mit einem eingeschlossenen Winkel dazwischen, der kleiner als ein zweiter Schwellenwert ist, und einem Abstand dazwischen, der kleiner als ein dritter Schwellenwert ist, umfassen; und
als Reaktion darauf, dass bestimmt wird, dass die in Frage kommenden Geraden die zwei in Frage kommenden Geraden umfassen, Zusammenführen (203) der zwei in Frage kommenden Geraden, um dadurch eine effektive Gerade zu erzeugen.

2. Verfahren nach Anspruch 1, wobei das Verfahren nach dem Bestimmen, ob die in Frage kommenden Geraden zwei in Frage kommende Geraden mit einem eingeschlossenen Winkel dazwischen, der kleiner als ein zweiter Schwellenwert ist, und einem Abstand dazwischen, der kleiner als ein dritter Schwellenwert ist, umfassen, ferner Folgendes umfasst:
als Reaktion darauf, dass eine erste in Frage kommende Gerade und eine zweite in Frage kommende Gerade einen eingeschlossenen Winkel dazwischen, der kleiner als der zweite Schwellenwert ist, und einen Abstand dazwischen, der größer als oder gleich dem dritten Schwellenwert und kleiner als ein vierter Schwellenwert ist, Bestimmen (204) einer von der ersten in Frage kommenden Gerade und der zweiten in Frage kommenden Gerade als eine effektive Gerade.

3. Verfahren nach Anspruch 2, wobei das Bestimmen (204) einer von der ersten in Frage kommenden Gerade und der zweiten in Frage kommenden Gerade als eine effektive Gerade Folgendes umfasst:
Vergleichen der relativen Positionen der ersten in Frage kommenden Gerade und der zweiten in Frage kommenden Gerade relativ zu den Gesichtsrahmen; und
Bestimmen einer von der ersten in Frage kommenden Gerade oder der zweiten in Frage kommenden Gerade, die näher bei dem Gesichtsrahmen ist, als die effektive Gerade.

4. Verfahren nach einem der Ansprüche 1-3, wobei das Bestimmen (301) eines momentanen zu korrigierenden Gesichtsrahmens basierend auf den Positionen der Gesichtsrahmen Folgendes umfasst:
Bestimmen eines Gesichtsrahmens, der nicht vollständig innerhalb eines voreingestellten Sichtfeldbereichs liegt, als den momentanen zu korrigierenden Gesichtsrahmen.

5. Verfahren nach Anspruch 4, wobei das Verfahren vor dem Bestimmen eines Gesichtsrahmens, der nicht vollständig innerhalb eines voreingestellten Sichtfeldbereichs liegt, als den momentanen zu korrigierenden Gesichtsrahmen ferner Folgendes umfasst:
Bestimmen des voreingestellten Sichtfeldbereichs basierend auf Attributen eines Kameramoduls, das das zu verarbeitende Bild erfasst, wobei die Attribute des Kameramoduls eine Einstellposition des Kameramoduls in einer Endeinrichtung und ein Sichtfeld des Kameramoduls umfassen.

6. Verfahren nach einem der Ansprüche 1-5, das ferner Folgendes umfasst:
Durchführen (401) einer Menschenabbilderkennung an dem zu verarbeitenden Bild und dadurch Bestimmen einer Menschenabbildregion in dem Bild;
wobei das Verfahren vor dem Extrahieren (103, 406) eines zu schützenden Satzes effektiver Geraden aus den Geraden basierend auf den Attributen jeder der Geraden ferner Folgendes umfasst:
Bestimmen (403) einer Beziehung zwischen jeder der Geraden und der Menschenabbildregion; und
Löschen (404) der in der Menschenabbildregion liegenden Gerade.

7. Verfahren nach Anspruch 6, wobei das Löschen (404) der in der Menschenabbildregion liegenden Gerade Folgendes umfasst:
als Reaktion auf das Bestimmen eines Teils der in der Menschenabbildregion liegenden Gerade Löschen der gesamten Gerade; oder
als Reaktion auf das Bestimmen eines Teils der in der Menschenabbildregion liegenden Gerade Löschen des Teils der in der Menschenabbildregion liegenden Gerade und Beibehalten eines anderen Teils der Gerade außerhalb der Menschenabbildregion.

8. Verfahren nach einem der Ansprüche 1-7, wobei das Durchführen (101, 402) einer Gesichtserkennung und einer Geradenerkennung an einem zu verarbeitenden Bild und das Bestimmen von Positionen von Gesichtsrahmen und Anfangskoordinaten und Endkoordinaten von Geraden in dem Bild dadurch Folgendes umfasst:
Erkennen von Gesichtern in dem Bild basierend auf einem voreingestellten Gesichtserkennungsalgorithmus und Identifizieren von Positionen der Gesichter durch die Gesichtsrahmen; und
Erkennen der Geraden in dem Bild basierend auf einem voreingestellten Geradenerkennungsalgorithmus, um dadurch die Anfangskoordinaten und die Endkoordinaten der Geraden zu bestimmen.

9. Gesichtsbildgeradenverarbeitungsvorrichtung (60), die Folgendes umfasst:
ein erstes Bestimmungsmodul (610), das konfiguriert ist, um eine Gesichtserkennung und eine Geradenerkennung in einem zu verarbeitenden Bild durchzuführen und dadurch Positionen von Gesichtsrahmen und Anfangskoordinaten und Endkoordinaten von Geraden in dem Bild zu bestimmen;
ein zweites Bestimmungsmodul (620), das konfiguriert ist, um Attribute jeder der Geraden basierend auf den Positionen der Gesichtsrahmen und den Anfangskoordinaten und den Endkoordinaten der Geraden zu bestimmen, wobei die Attribute jeder der Geraden eine Länge der Gerade und relative Positionen der Gerade relativ zu den Gesichtsrahmen umfassen;
ein Extraktionsmodul (630), das konfiguriert ist, um basierend auf den Attributen jeder der Geraden einen zu schützenden Satz effektiver Geraden aus den Geraden zu extrahieren;
ein Verzerrungskorrekturmodul (640), das konfiguriert ist, um während des Durchführens einer Gesichtsverzerrungskorrektur an dem zu verarbeitenden Bild relative Positionen von Punkten auf jeder von effektiven Geraden in dem Satz effektiver Geraden unverändert zu lassen;
ein drittes Bestimmungsmodul (650), das konfiguriert ist, um einen momentanen zu korrigierenden Gesichtsrahmen basierend auf den Positionen der Gesichtsrahmen zu bestimmen; und
ein Filtermodul 660, das konfiguriert ist, um die effektiven Geraden basierend auf relativen Positionen jeder der Geraden relativ zu dem zu korrigierenden Gesichtsrahmen zu filtern,
**dadurch gekennzeichnet, dass** das Extraktionsmodul (630) eine Extraktionseinheit (631), eine Bestimmungseinheit (632) und eine Verarbeitungseinheit (633) umfasst;
die Extraktionseinheit (631) konfiguriert ist, um in Frage kommende Geraden je mit einer Länge, die größer als ein erster Schwellenwert ist, aus den Geraden zu extrahieren;
die Bestimmungseinheit (632) konfiguriert ist, um zu bestimmen, ob die in Frage kommenden Geraden zwei in Frage kommende Geraden mit einem eingeschlossenen Winkel dazwischen, der kleiner als ein zweiter Schwellenwert ist, und einem Abstand dazwischen, der kleiner als ein dritter Schwellenwert ist, beinhalten; und
die Verarbeitungseinheit (633) konfiguriert ist, um als Reaktion darauf, dass bestimmt wird, dass die in Frage kommenden Geraden die zwei in Frage kommenden Geraden beinhalten, die zwei in Frage kommenden Geraden zusammenzuführen, um eine effektive Gerade zu erzeugen.

10. Endeinrichtung (70), die einen Prozessor (710) und einen Speicher (720) umfasst;
wobei der Prozessor (710) konfiguriert ist, um ausführbaren Programmcode, der im Speicher (720) gespeichert ist, zu lesen und ein mit dem ausführbaren Programmcode korrespondierendes Programm ablaufen zu lassen, um dadurch das Gesichtsbildgeradenverarbeitungsverfahren nach einem der Ansprüche 1-8 auszuführen.

11. Computerlesbares Speichermedium, in dem ein Computerprogramm gespeichert ist, wobei das Computerprogramm durch einen Prozessor ausführbar ist, um das Gesichtsbildgeradenverarbeitungsverfahren nach einem der Ansprüche 1-8 zu implementieren.

## Revendications

1. Procédé de traitement de ligne droite d'image de visage, comprenant :
la réalisation (101, 402) d'une détection de visage et d'une détection de ligne droite sur une image à traiter, et ainsi la détermination de positions de trames de visage et de coordonnées de début et de coordonnées de fin de lignes droites dans l'image ;
la détermination (102, 405) d'attributs de chacune des lignes droites sur la base des positions des trames de visage et des coordonnées de début et des coordonnées de fin des lignes droites, les attributs de chacune des lignes droites comprenant une longueur de la ligne droite et des positions relatives de la ligne droite relativement aux trames de visage ;
l'extraction (103, 406), sur la base des attributs de chacune des lignes droites, d'un ensemble de lignes droites effectives à protéger des lignes droites ; et
le fait de garder (104, 407), pendant la réalisation d'une correction de distorsion de visage sur l'image à traiter, des positions relatives de points sur chacune des lignes droites effectives dans l'ensemble de lignes droites effectives inchangées ;
après l'extraction (103, 406), sur la base des attributs de chacune des lignes droites, d'un ensemble de lignes droites effectives à protéger des lignes droites, le procédé comprend en outre :
la détermination (301) d'une trame de visage actuelle à corriger sur la base des positions des trames de visage ; et
le filtrage (302) des lignes droites effectives sur la base de positions relatives des lignes droites relativement à la trame de visage actuelle à corriger ;
**caractérisé en ce que** l'extraction (103, 406), sur la base des attributs de chacune des lignes droites, d'un ensemble de lignes droites effectives à protéger des lignes droites comprend :
l'extraction (201) de lignes droite candidates ayant chacune une longueur supérieure à un premier seuil à partir des lignes droites ;
la détermination (202) de si les lignes droites candidates comprennent deux lignes droites candidates avec un angle inclus entre elles inférieur à un deuxième seuil et une distance entre elles inférieure à un troisième seuil ; et
la fusion (203), en réponse à la détermination des lignes droites candidates comme comprenant les deux lignes droites candidates, des deux lignes droites candidates, pour ainsi générer une ligne droite effective.

2. Procédé selon la revendication 1, dans lequel après la détermination de si les lignes droites candidates comprennent deux lignes droites candidates avec un angle inclus entre elles inférieur à un deuxième seuil et une distance entre elles inférieure à un troisième seuil, le procédé comprend en outre :
la détermination (204), en réponse à une première ligne droite candidate et à une deuxième ligne droite candidate ayant un angle inclus entre elles inférieur au deuxième seuil et une distance entre elles supérieure ou égale au troisième seuil et inférieure à un quatrième seuil, d'une ligne droite candidate parmi la première ligne droite candidate et la deuxième ligne droite candidate comme ligne droite effective.

3. Procédé selon la revendication 2, dans lequel la détermination (204) d'une ligne droite candidate parmi la première ligne droite candidate et la deuxième ligne droite candidate comme ligne droite effective, comprend :
la comparaison des positions relatives de la première ligne droite candidate et de la deuxième ligne droite candidate relativement aux trames de visage ; et
la détermination, comme la ligne droite effective, d'une ligne droite candidate parmi la première ligne droite candidate ou la deuxième ligne droite candidate qui est plus proche de la trame de visage.

4. Procédé selon l'une quelconque des revendications 1 à 3, dans lequel la détermination (301) d'une trame de visage actuelle à corriger sur la base des positions des trames de visage comprend :
la détermination d'une trame de visage qui n'est pas complètement située à l'intérieur d'une plage de champ de vision prédéfinie comme la trame de visage actuelle à corriger.

5. Procédé selon la revendication 4, dans lequel avant la détermination d'une trame de visage qui n'est pas complètement située à l'intérieur d'une plage de champ de vision prédéfinie comme la trame de visage actuelle à corriger, le procédé comprend en outre :
la détermination de la plage de champ de vision prédéfinie sur la base d'attributs d'un module de caméra capturant l'image à traiter, les attributs du module de caméra comprenant une position de réglage du module de caméra dans un dispositif terminal et un champ de vision du module de caméra.

6. Procédé selon l'une quelconque des revendications 1 à 5, comprenant en outre :
la réalisation (401) d'une détection d'image humaine sur l'image à traiter, et ainsi la détermination d'une région d'image humaine dans l'image ;
dans lequel avant l'extraction (103, 406), sur la base des attributs de chacune des lignes droites, d'un ensemble de lignes droites effectives à protéger des lignes droites, le procédé comprend en outre :
la détermination (403) d'une relation entre chacune des lignes droites et la région d'image humaine ; et
la suppression (404) de la ligne droite située dans la région d'image humaine.

7. Procédé selon la revendication 6, dans lequel la suppression (404) de la ligne droite située dans la région d'image humaine comprend :
en réponse à la détermination d'une partie de la ligne droite située dans la région d'image humaine, la suppression de toute la ligne droite ; ou
en réponse à la détermination d'une partie de la ligne droite située dans la région d'image humaine, la suppression de la partie de la ligne droite située dans la région d'image humaine, et la conservation d'une autre partie de la ligne droite à l'extérieur de la région d'image humaine.

8. Procédé selon l'une quelconque des revendications 1 à 7, dans lequel la réalisation (101, 402) d'une détection de visage et d'une détection de ligne droite sur une image à traiter, et ainsi la détermination de positions de trames de visage et de coordonnées de début et de coordonnées d'extrémité de lignes droites dans l'image, comprend :
la détection de visages dans l'image sur la base d'un algorithme de détection de visage prédéfini, et l'identification de positions des visages à travers les trames de visage ; et
la détection des lignes droites dans l'image sur la base d'un algorithme de détection de ligne droite prédéfini pour ainsi déterminer les coordonnées de début et les coordonnées de fin des lignes droites.

9. Appareil de traitement de ligne droite d'image de visage (60), comprenant :
un premier module de détermination (610), configuré pour réaliser une détection de visage et une détection de ligne droite dans une image à traiter et ainsi déterminer des positions de trames de visage et de coordonnées de début et de coordonnées d'extrémité de lignes droites dans l'image ;
un deuxième module de détermination (620) configuré pour déterminer des attributs de chacune des lignes droites sur la base des positions des trames de visage et des coordonnées de début et des coordonnées de fin des lignes droites, les attributs de chacune des lignes droites comprenant une longueur de la ligne droite et des positions relatives de la ligne droite relativement aux trames de visage ;
un module d'extraction (630), configuré pour extraire, sur la base des attributs de chacune des lignes droites, un ensemble de lignes droites effectives à protéger des lignes droites ;
un module de correction de distorsion (640), configuré pour garder, pendant la réalisation d'une correction de distorsion de visage sur l'image à traiter, des positions relatives de points sur chacune des lignes droites effectives dans l'ensemble de lignes droites effectives inchangées ;
un troisième module de détermination (650), configuré pour déterminer une trame de visage actuelle à corriger sur la base des positions des trames de visage ; et
un module de filtrage 660, configuré pour filtrer les lignes droites effectives sur la base de positions relatives de chacune des lignes droites relativement à la trame de visage actuelle à corriger
**caractérisé en ce que** le module d'extraction (630) comprend une unité d'extraction (631), une unité de détermination (632), et une unité de traitement (633) ;
l'unité d'extraction (631) est configurée pour extraire des lignes droite candidates ayant chacune une longueur supérieure à un premier seuil à partir des lignes droites ;
l'unité de détermination (632) est configurée pour déterminer si les lignes droites candidates incluent deux lignes droites candidates avec un angle inclus entre elles inférieur à un deuxième seuil et une distance entre elles inférieure à un troisième seuil ; et
l'unité de traitement (633) est configurée pour fusionner, en réponse à la détermination que les lignes droites candidates incluent les deux lignes droites candidates, les deux lignes droites candidates pour générer une ligne droite effective.

10. Dispositif terminal (70), comprenant un processeur (710) et une mémoire (720) ;
le processeur (710) étant configuré pour lire un code de programme exécutable stocké dans la mémoire (720) et faire tourner un programme correspondant au code de programme exécutable pour ainsi exécuter le procédé de traitement de ligne droite d'image de visage selon l'une quelconque des revendications 1 à 8.

11. Support de stockage lisible par ordinateur, stocké avec un programme informatique, le programme informatique étant exécutable par un processeur pour mettre en œuvre le procédé de traitement de ligne droite d'image de visage selon l'une quelconque des revendications 1 à 8.
